Europäisches Patentamt

European Patent Office

Office européen des brevets

(19)

(11) Veröffentlichungsnummer: **0 017 034**
**B1**

(12) **EUROPÄISCHE PATENTSCHRIFT**

(45) Veröffentlichungstag der Patentschrift: **28.12.83**

(51) Int. Cl.³: **H 04 L 11/18**

(21) Anmeldenummer: **80101276.6**

(22) Anmeldetag: **12.03.80**

(54) Schaltungsanordnung zur Abgabe von digitalen Nachrichtensignalen im Zuge von Rundschreibverbindungen über eine Datenvermittlungsanlage.

(30) Priorität: **30.03.79 DE 2912825**

(43) Veröffentlichungstag der Anmeldung:
**15.10.80 Patentblatt 80/21**

(45) Bekanntmachung des Hinweises auf die Patenterteilung:
**28.12.83 Patentblatt 83/52**

(84) Benannte Vertragsstaaten:
**AT BE CH DE FR GB IT LU NL SE**

(56) Entgegenhaltungen:

EVOLUTIONS IN COMPUTER COMMUNICATIONS, Proceedings of the fourth international conference on computer communication, 26.-29. September 1978, North-Holland Publishing Company-Amsterdam-New York-Oxford, Seiten 9-16 Kyoto, JP. G. ALTEHAGE et al.: "The Public Switched Data Network of the Deutsche Bundespost: Three years of Experience with the Electronic Data Switching System EDS-Future Development of EDS"

(73) Patentinhaber: SIEMENS AKTIENGESELLSCHAFT
Berlin und München Wittelsbacherplatz 2
D-8000 München 2 (DE)

(72) Erfinder: Hagen, Rolf, Dipl.-Ing.
Fasanenstrasse 38
D-8025 Unterhaching (DE)
Erfinder: Linck, Diethard
Oberländerstrasse 24a
D-8000 München 70 (DE)
Erfinder: Pappenberger, Jörg
Leitzachstrasse 16
D-8200 Rosenheim (DE)

(56) Entgegenhaltungen:
INTERNATIONAL SWITCHING SYMPOSIUM 25.-29. Oktober 1976, Kyoto, Japan Seiten 441.1.1 - 441.1.8 Tokyo, JP. MASATO CHIBA et al.: "A commercial test of digital data networks and its future survey"
THE TRANSACTIONS OF THE IECE OF JAPAN, Band E60, Nr. 9, September 1977, Seiten 497,498 Tokyo, JP. OSATAKE et al.: "Traffic Handling Characteristics of a Multi-Address Calling System"
SIEMENS REVIEW, Band 45, Nr. 5, Mai 1978, Seiten 234-238 Erlangen, DE. LASCHKE: "Fully Automatic Multi-Address Service in Public and Private Switched TWK Teleprinter Networks"

## Schaltungsanordnung zur Abgabe von digitalen Nachrichtensignalen im Zuge von Rundschreibverbindungen über eine Datenvermittlungsanlage

Die Erfindung bezieht sich auf eine Schaltungsanordnung zur Abgabe von digitalen Nachrichtensignalen im Zuge von Rundschreibverbindungen von wenigstens einer Sende-Teilnehmerstelle an eine Mehrzahl von Empfangs-Teilnehmerstellen über eine an einer Datenvermittlungsanlage angeschlossene Rundschreibeinrichtung, wobei sämtliche Teilnehmerstellen an der Datenvermittlungsanlage angeschlossen und für die Übertragung von Signalen entsprechend jeweils einer von zwei festgelegten, voneinander verschiedenen Datenübertragungsprozeduren und mit unterschiedlichen Datenformaten ausgelegt sind und wobei die jeweilige Sende-Teilnehmerstelle zusätzlich zu den Nachrichtensignalen ihre Rufnummer und die Rufnummern sämtlicher Empfangs-Teilnehmerstellen abgibt, wobei zunächst die von der jeweiligen Sende-Teilnehmerstelle entsprechend der für diese festgelegten Datenübertragungsprozedur und in dem für diese festgelegten Datenformat abgegebenen Nachrichtensignale und Rufnummern über die Datenvermittlungsanlage vollständig in einer Speicheranordnung der eine gesonderte Steuereinrichtung enthaltenden Rundschreibeinrichtungen eingespeichert werden, welche lediglich für die Dauer der Übertragung der betreffenden Nachrichtensignale und Rufnummern mit der Datenvermittlungsanlage verbunden ist, und wobei sodann die in der Speicheranordnung der Rundschreibeinrichtung gespeicherten Nachrichtensignale unter der Steuerung durch die Steuereinrichtung der Rundschreibeinrichtung sequentiell über jeweils nur für die Dauer einer Nachrichtensignalübertragung hergestellte Verbindungen an die durch die ebenfalls gespeicherten Rufnummern bezeichneten Empfangs-Teilnehmerstellen entsprechend den für diese festgelegten Datenübertragungsprozeduren und in den für diese festgelegten Datenformaten ausgesendet werden.

Eine Schaltungsanordnung der vorstehend bezeichneten Art ist in allgemeiner Form bereits bekannt (Zeitschrift "Proceedings of the Fourth International Conference on Computer Communication", Kyoto, Japan 26—29 September 1978, North Holland Publishing Company, Amsterdam, New, York, Oxford, Seiten 9 bis 16). Über die eigentliche Realisierung der betreffenden Schaltungsanordnung und der dabei verwendeten Rundschreibeinrichtung ist dabei jedoch nichts bekannt.

Im Zusammenhang mit digitalen Datennetzwerken ist es auch schon bekannt ("International Switching Symposium", Kyoto, Japan, 25—29 October 1976, Seiten 441-1-1 bis 441-1-8), nicht nur eine Prozedurumsetzung im Zuge einzelner Verbindungen vorzusehen, sondern auch Rundschreibverbindungen zu ermöglichen. Über die eigentliche Realisierung einer Schaltungsanordnung zur Abgabe von digitalen Nachrichtensignalen im Zuge von Rundschreibverbindungen ist jedoch auch in diesem Zusammenhang nichts bekannt.

Der Erfindung liegt demgemäß die Aufgabe zugrunde, einen Weg zu zeigen, wie bei einer Schaltungsanordnung der eingangs genannten Art die Rundschreibeinrichtung mit relativ geringem schaltungstechnischem Aufwand realisiert werden kann.

Gelöst wird die vorstehend aufgezeigte Aufgabe bei einer Schaltungsanordnung der eingangs genannten Art erfindungsgemäß dadurch, daß die Speicheranordnung der Rundschreibeinrichtung an der Datenvermittlungsanlage über Schnittstellenschaltungen angeschlossen ist, von denen wenigstens eine Schnittstellenschaltung sowohl Signalisierungsinformationen als auch Nachrichtensignale aufzunehmen und abzugeben vermag und von denen wenigstens eine weitere Schnittstellenschaltung eine für die Aufnahme und Abgabe von Signalisierungsinformationen (Rufnummern) dienende Signalisierungsschaltung und eine Datenübertragungsschaltung enthält, welche lediglich bei der Nachrichtensignalübertragung zwischen der Speicheranordnung der Rundschreibeinrichtung und der jeweiligen Teilnehmerstelle wirksam ist, daß die Signalisierungsschaltung und die Datenübertragungsschaltung der genannten weiteren Schnittstellenschaltung eingangsseitig gemeinsam und ausgangsseitig über eine Weichenschaltung an einer gesonderten Anschlußschaltung der Datenvermittlungsanlage angeschlossen sind, daß die Weichenschaltung für die Übertragung von Nachrichtensignalen und Signalisierungsinformationen in unterschiedlichen Stellungen eingestellt ist und daß die Steuerschaltung einen Microprozessor enthält, der mit einer Datenbusleitung, einer Adreßbusleitung und einer Steuerbusleitung sowohl an den Schnittstellenschaltungen und der Speicheranordnung als auch an einem Programmspeicher angeschlossen ist.

Die Erfindung bringt den Vorteil mit sich, daß insgesamt mit einem besonders geringen schaltungstechnischen Aufwand in der Rundschreibeinrichtung ausgekommen werden kann, um dennoch die Übertragung von digitalen Signalen zwischen mit unterschiedlichen Datenübertragungsprozeduren und unterschiedlichen Datenformaten arbeitenden Sende- und Empfangseinrichtungen im Zuge von Rundschreibverbindungen vorzunehmen.

Anhand einer Zeichnung wird die Erfindung nachstehend an einem Ausführungsbeispiel näher erläutert.

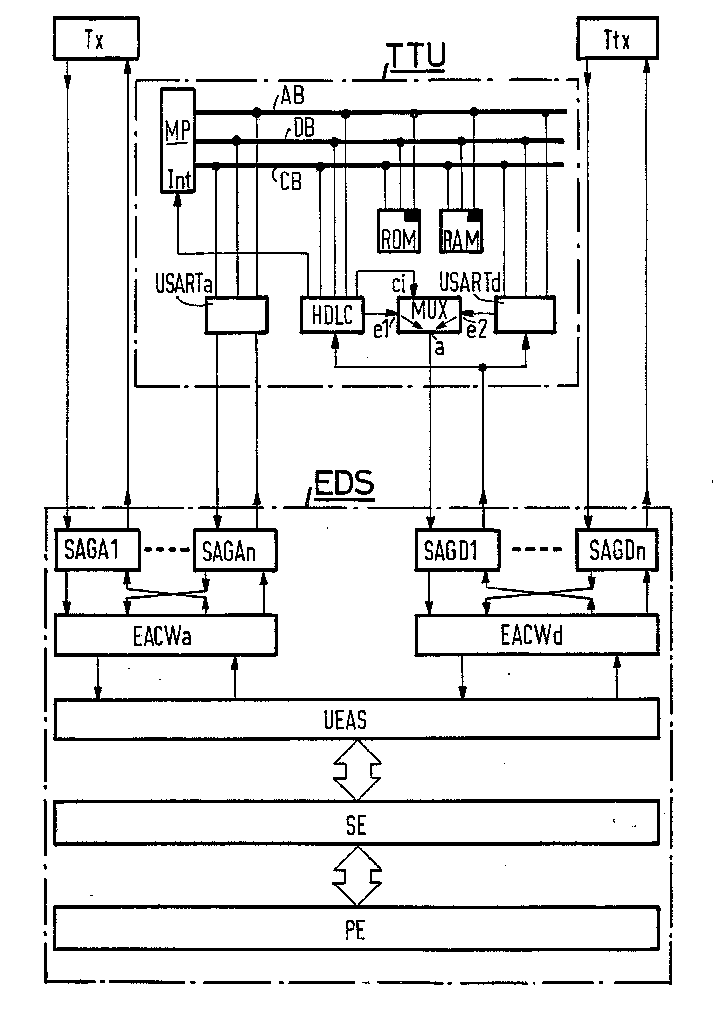

In der Zeichnung ist ausschnittsweise eine bekannte elektronische Datenvermittlungsanlage EDS dargestellt (siehe "Siemens-Zeitschrift", Heft 2, 1977, Seiten 82 bis 87). Von dieser Datenvermittlungsanlage EDS sind im

vorliegenden Fall lediglich zu einer ersten Gruppe von Anschlußschaltungen gehörende Anschlußschaltungen SAGA1 bis SAGAn, zu einer zweiten Gruppe von Anschlußschaltungen gehörende Anschlußschaltungen SAGD1 bis SAGDn, den einzelnen Gruppen von Anschlußschaltungen zugehörige Eingabe-/Ausgabe-Codewandler EACWa bzw. EACWd, eine Übertragungsablaufsteuerung UEAS, eine Speichereinheit SE und eine Programmsteuereinheit PE dargestellt. Die Anschlußschaltungen SAGA1 bis SAGAn dienen dazu, digitale Signale polaritätswechselweise zu verarbeiten. Die zu der anderen Gruppe von Anschlußschaltungen gehörenden Anschlußschaltungen SAGD1 bis SAGDn dienen zur Verarbeitung von sogenannten Bitgruppen, das sind jeweils eine Mehrzahl von Bits umfassende digitale Signale. Derartige Bitgruppen werden zuweilen auch als Envelopes bezeichnet.

Von den in der Zeichnung angedeuteten Anschlußschaltungen sind die Polaritätswechsel verarbeitenden Anschlußschaltungen mit Sende-/Empfangseinrichtungen verbunden, welche digitale Signale mit einer ersten Datenübertragungsrate und in einem ersten Datenformat abgeben und aufnehmen. Bei diesen Sende-/Empfangseinrichtungen mag es sich um übliche Fernschreib- bzw. Telex-Stationen handeln, von denen eine in der Zeichnung mit Tx angedeutet ist. Diese Telex-Stationen mögen mit einer Datenübertragungsrate von 50 Bd und unter Ausnutzung des internationalen Telegrafenalphabets Nr. 2 arbeiten, also mit einem Start-Stop-Datenformat. Die digitale Signale in Form von Bitgruppen bzw. Envelopes verarbeitenden Anschlußschaltungen der in der Zeichnung dargestellten zweiten Gruppe von Anschlußschaltungen SAGD1 bis SAGDn sind mit Sende-/Empfangseinrichtungen verbunden, die digitale Signale seriell in Form von Bitgruppen abgeben bzw. aufnehmen können. Bei diesen Sende-/Empfangseinrichtungen mag es sich im vorliegenden Fall um Bürofernschreibstationen handeln, die auch als Teletex-Stationen bezeichnet werden, von denen eine in der Zeichnung mit Ttx bezeichnet ist. Diese Bürofernschreibstationen vermögen digitale Signale mit einer Datenübertragungsrate von 2400 Bit/sec abzugeben und aufzunehmen, und zwar als synchrone Datensignale. Diese bedeutet, daß zu jeweils einer Bitgruppe gehörende Bits nicht durch Start- und Stop-Zeichen festgelegt sind.

Mit der in der Zeichnung dargestellten Datenvermittlungsanlage EDS ist erfindungsgemäß eine Rundschreibeinrichtung TTU verbunden, die — wie dies noch ersichtlich werden wird — auch Umsetzfunktionen erfüllt. Diese Rundschreibeinrichtung TTU, die gegebenenfalls in einer Mehrzahl vorgesehen sein kann, weist gewissermaßen zwei unterschiedliche Anschlußseiten auf. Mit ihrer einen Anschlußseite ist die Rundschreibeinrichtung TTU an einer der zu der ersten Gruppe von Anschlußschaltungen gehörenden Anschlußschaltungen SAGA1 bis SAGAn angeschlossen. Mit ihrer anderen Anschlußseite ist die Rundschreibeinrichtung TTU an einer der zu der zweiten Gruppe von Anschlußschaltungen gehörenden Anschlußschaltungen SAGD1 bis SAGDn angeschlossen. Dabei ist die Rundschreibeinrichtung TTU auf ihrer genannten einen Anschlußseite mittels einer Schnittstellenschaltung USARTa eingangs- und ausgangsseitig mit der Anschlußschaltung SAGAn der ersten Gruppe von Anschlußschaltungen der Datenvermittlungsanlage EDS verbunden. Auf ihrer anderen Anschlußseite ist die Rundschreibeinrichtung TTU an der Anschlußschaltung SAGD1 der zweiten Gruppe von Anschlußschaltungen der Datenvermittlungsanlage EDS mit einer weiteren Schnittstellenschaltung angeschlossen. Diese weitere Schnittstellenschaltung enthält eine auch als Signalisierungsschaltung bezeichnete Signalisierungs-Umsetzschaltung USARTd und eine Datenübertragungsschaltung HDLC. Diese beiden Schaltungen sind mit ihren einen Eingängen gemeinsam am Ausgang der Anschlußschaltung SAGD1 angeschlossen. Diese Anschlußschaltung SAGD1 ist mit ihrem Eingang am Ausgang a einer Weichenschaltung MUX angeschlossen, die mit Signaleingängen e2, e1 an Ausgängen der zu der gerade betrachteten Schnittstellenschaltung gehörenden Schaltungen USARTd und HDLC angeschlossen ist. Mit einem Steuereingang $c_i$ ist die Weichenschaltung MUX an einem Steuerausgang der Datenübertragungsschaltung HDLC angeschlossen. Je nach dem, welches Steuersignal dem Steuereingang $c_i$ der Weichenschaltung MUX zugeführt wird, verbindet diese ihren Ausgang a entweder mit ihrem Signaleingang e2 oder mit ihrem Signaleingang e1. Dabei kann so vorgegangen sein, daß die Weichenschaltung MUX bei Fehlen eines entsprechenden Steuersignals ihren Ausgang a mit ihrem Signaleingang e2 verbindet bzw. diese Verbindung durchschaltet. An dieser Stelle sei noch angemerkt, daß die mit den beiden Signaleingängen e1, e2 verbundenen Ausgänge der Datenübertragungsschaltung HDLC bzw. der Signalisierungs-Umsetzschaltung USARTd an diesen Ausgängen nicht Signale abgeben, die ihnen an den zuvor betrachteten Eingängen zugeführt worden sind. Vielmehr geben die betreffenden Schaltungen an den gerade erwähnten Ausgängen Signale dann ab, wenn ihnen an noch zu betrachtenden weiteren Eingängen bzw. Anschlüssen entsprechende Signale zugeführt werden. Im Hinblick auf die Steuerung der Weichenschaltung MUX sei noch bemerkt, daß ein dazu erforderliches Steuersignal auf entsprechende Ansteuerung der Datenübertragungsschaltung HDLC von der noch näher zu betrachtenden Steuerschaltung der Rundschreibeinrichtung TTU abgegeben werden mag.

Die vorstehend betrachteten beiden Schnittstellenschaltungen — zum einen die Schnittstellenschaltung USARTa und zum anderen die Schnittstellenschaltung mit der Datenübertragungsschaltung HDLC und der Signalisierungs-Umsetzschaltung USARTd — sind mit einer Anzahl von Anschlüssen mit der bereits erwähnten Steuerschaltung der Rundschreibeinrichtung TTU verbunden. Diese Steuerschaltung enthält im vorliegenden Fall einen Mikroprozessor MP mit zugehörigem Programmspeicher ROM. In der Zeichnung ist in diesem Zusammenhang angedeutet, daß eine Anzahl von Busleitungen vorgesehen ist, an denen der Mikroprozessor MP und der Programmspeicher ROM angeschlossen sind. Bei diesem Programmspeicher ROM handelt es sich vorzugsweise um einen Lesespeicher. Eine Busleitung, AB, stellt eine Adreßbusleitung dar. Eine weitere Busleitung, DB, stellt eine Datenbusleitung dar. Die letzte noch dargestellte Busleitung, CB, stellt eine Steuerbusleitung dar. An diesen drei Busleitungen AB, DB und CB sind die erwähnten Schnittstellenschaltungen mit entsprechenden Anschlüssen angeschlossen. Außerdem ist an den drei Busleitungen noch eine durch einen Speicher RAM angedeutete Speicheranordnung mit entsprechenden Anschlüssen angeschlossen. Bei diesem Speicher RAM handelt es sich um einen solchen mit wahlfreiem Zugriff. Wie weiter unten noch ersichtlich werden wird, dient dieser Speicher RAM dazu, Signale zwischenzuspeichern,. die im Zuge von Rundschreibverbindungen von Sende-Teilnehmerstellen zu Empfangs-Teilnehmerstellen hin zu übertragen sind. Diese Signale umfassen sowohl Signalisierungsinformationen als auch Nachrichteninformationen.

Neben den zuvor erläuterten Schaltungsverbindungen ist noch auf eine weitere Schaltungsverbindung hinzuweisen. Die Datenübertragungsschaltung HDLC der Rundschreibeinrichtung TTU ist nämlich mit einem gesonderten Ausgang an einem sogenannten Unterbrechungseingang Int des Mikroprozessors MP angeschlossen. Über diese Verbindung kann der Mikroprozessor MP in seinem Betrieb von der Datenübertragungsschaltung HDLC her veranlaßt werden, die Abwicklung von Vorgängen zu steuern, welche die Daten- bzw. Nachrichtensignalübertragung betreffen, wie dies weiter unten noch näher ersichtlich werden wird.

Nunmehr sei die Arbeitsweise der vorstehend erläuterten Schaltungsanordnung näher betrachtet. Dabei wird zunächst prinzipiell auf diejenigen Vorgänge eingegangen, die für den Aufbau von Rundschreibverbindungen von einer Telex-Station Tx zu Empfangs-Teilnehmerstellen hin maßgebend sind, bei denen es sich sowohl um Teletex-Stationen Ttx als auch im Telex-Stationen handeln mag. Auf die generellen Funktionen der Datenvermittlungsanlage EDS braucht in diesem Zusammenhang nicht weiter eingegangen zu werden, da diese Funktionen bereits hinlänglich bekannt sind (siehe die oben genannte Zeitschrift).

Zur Erläuterung der vorstehend angedeuteten Vorgänge sei angenommen, daß die Telex-Station Tx eine Fernschreibnachricht — d.h. ein komplettes Fernschreiben — mit 50 Bd aussenden. Die diese Fernschreibnachricht betreffenden digitalen Signale (und zwar sowohl die Signalisierungsinformationen bzw. Rufnummern als auch die Nachrichteninformationen) gelangen über Anschlußschaltung SAGA1 in die Datenvermittlungsanlage EDS hinein, welche aufgrund ihrer Vermittlungsfunktion diese digitalen Signale über die Anschlußschaltung SAGAn an die Schnittstellenschaltung USARTa der Rundschreibeinrichtung TTU abgibt. Die Schnittstellenschaltung USARTa mag im vorliegenden Fall die ihr seriell zugeführten digitalen Signale in eine Parallelform umsetzen und über die Datenbusleitung DB an den Speicher RAM abgeben. Dabei werden sämtliche zu der Fernschreibnachricht gehörenden digitalen Signale in diesem Speicher RAM eingespeichert, bevor weitere Übertragungsvorgänge ablaufen.

Nachdem in dem Speicher RAM die gesamte Fernschreibnachricht zusammen mit den Rufnummern der in Frage kommenden Empfangs-Teilnehmerstellen und gegebenenfalls auch die Rufnummer der sendenden Teilnehmerstelle eingespeichert sind, wird die betreffende Fernschreibnachricht aus diesem Speicher RAM praktisch zerstörungsfrei nacheinander wieder ausgespeichert, und zwar zumindest in einer der Anzahl derjenigen Teilnehmerstellen, welche die betreffende Fernschreibnachricht als Empfangs-Teilnehmerstellen empfangen sollen, entsprechenden Häufigkeit. Die betreffende Fernschreibnachricht wird dabei — je nach dem, ob es sich bei der jeweiligen Empfangs-Teilnehmerstelle um eine Telex-Station oder um eine Teletex-Station handelt — über die Datenbusleitung DB entweder an die eine Schnittstellenschaltung USARTa oder an die andere Schnittstellenschaltung mit der Datenübertragungsschaltung HDLC und der Signalisierungs-Umsetzschaltung USARTd abgegeben. Handelt es sich bei der in Frage kommenden Empfangs-Teilnehmerstelle um eine Telex-Station, so erfährt die betreffende Fernschreibnachricht in der Schnittstellenschaltung USARTa wiederum eine Parallel-Serien-Umsetzung, bevor sie über die Datenvermittlungsanlage EDS an die betreffende Empfangs-Teilnehmerstelle abgegeben wird. Handelt es sich hingegen bei der in Frage kommenden Empfangs-Teilnehmerstelle um eine Teletex-Station, so erfährt die aus dem Speicher RAM ausgelesene Fernschreibnachricht in der Datenübertragungsschaltung HDLC sowohl eine Parallel-Serien-Umsetzung als auch eine Formatumsetzung, so daß die betreffende Fernschreibnachricht sodann von der Rundschreibeinrichtung TTU an die Datenvermittlungsanlage EDS in einer solchen Form abgegeben wird, wie sie von einer Teletex-Station aufnehmbar ist. Die betreffende Fernschreibnachricht gelangt dabei über die entsprechend eingestellte Weichenschaltung MUX zu der Datenvermittlungsanlage EDS hin.

Welche der Schnittstellenschaltungen der Rundschreibeinrichtung TTU benutzt wird, um die in dem Speicher RAM der Rundschreibeinrichtung TTU gespeicherten Fernschreibsignale abzugeben, hängt also davon ab, ob die jeweilige Empfangs-Teilnehmerstelle eine Telex-Station oder eine Teletex-Station ist. Die hierfür erforderliche Unterscheidung kann anhand der Rufnummern dieser Empfangs-Teilnehmerstellen vorgenommen werden, die ebenfalls in dem Speicher RAM gespeichert sind. Dabei kann das Format der betreffenden Rufnummer bzw. der numerische Wert als Kriterium dafür herangezogen werden, ob eine derartige Rufnummer und anschließend die Fernschreibnachricht über die eine Schnittstellenschaltung oder über die andere Schnittstellenschaltung der Rundschreibeinrichtung TTU abgegeben wird. Handelt es sich bei der betreffenden Rufnummer um die einer Teletex-Station, so gelangt diese Rufnummer über die Signalisierungs-Umsetzschaltung USARTd und die entsprechend eingestellte Weichenschaltung MUX zu der Datenvermittlungsanlage EDS hin, die daraufhin eine entsprechende Verbindung zu der in Frage kommenden Teletex-Station als einer Empfangs-Teilnehmerstelle aufbaut.

Werden von einer Teletex-Station, wie der in der Zeichnung angedeuteten Teletex-Station Ttx, als einer Sende-Teilnehmerstelle digitale Signale darstellende Fernschreibnachrichtensignale abgegeben, die im Zuge einer Rundschreibverbindung zu Empfangs-Teilnehmerstellen hin weiterzuleiten sind — welche sowohl Telex-Stationen als auch Teletex-Stationen umfassen — so laufen folgende Vorgänge ab. Die betreffenden digitale Signale darstellenden Fernschreibnachrichtsignale gelangen zunächst über die Anschlußschaltung SAGDn in die Datenvermittlungsanlage EDS hinein, welche die betreffenden Signale über die Anschlußschaltung SAGD1 an die Rundschreibeinrichtung TTU abgibt. Dabei nimmt die Datenübertragungsschaltung HDLC nunmehr eine Serien-Parallel-Umwandlung dieser seriell auftretenden digitalen Signale vor und gibt sie über die Datenbusleitung DB an den Speicher RAM ab. Nachdem sämtliche zu einer Fernschreibnachricht gehörenden digitalen Signale in diesem Speicher RAM gespeichert sind, werden diese digitalen Signale wieder aus diesem Speicher RAM ausgespeichert und über die Datenbusleitung DB an jeweils eine der beiden Schnittstellenschaltungen der Rundschreibeinrichtung TTU abgegeben. Die hierbei ablaufenden Vorgänge entsprechen den Vorgängen, die im Zusammenhang mit der Abgabe einer Fernschreibnachricht von einer Telex-Station als einer Sende-Teilnehmerstelle zuvor erläutert worden sind. Demgemäß sind auch hier die Rufnummern der betreffenden Empfangs-Teilnehmerstellen maßgebend dafür, über welche der beiden Schnittstelleneinrichtungen der Rundschreibeinrichtung TTU die jeweilige Fernschreibnachricht weitergegeben wird. Diese Rufnummern und gegebenenfalls auch die Rufnummer der Teletex-Station als der Sende-Teilnehmerstelle werden ebenfalls in dem Speicher RAM der Rundschreibeinrichtung TTU gespeichert.

Im Hinblick auf die von der Teletex-Station Ttx als einer Sende-Teilnehmerstelle abgegebenen digitalen Signale sei noch bemerkt, daß diese in der die Signalisierungs-Umsetzschaltung USARTd und die Datenübertragungsschaltung HDLC umfassenden Schnittstellenschaltung der Rundschreibeinrichtung TTU in dem Fall eine Formatumwandlung erfahren, daß es sich dabei um einer Telex-Station zuzuführende Signale handelt. Sind die betreffenden digitalen Signale hingegen einer Teletex-Station zuzuführen, so braucht eine derartige Formatumwandlung nicht vorgenommen zu werden. In jedem Falle erfolgt jedoch in den beiden Schaltungen USARTd, HDLC der einen Schnittstellenschaltung eine Serien-Parallel-Umsetzung bzw. eine Parallel-Serien-Umsetzung, so daß die Signalübertragung innerhalb der Rundschreibeinrichtung TTU in Parallelform erfolgt. In diesem Zusammenhang sei noch angemerkt, daß vorzugsweise so vorgegangen sein kann, daß die über die Schnittstellenschaltung mit der Signalisierungs-Umsetzschaltung USARTd und der Datenübertragungsschaltung HDLC jeweils zugeführten digitalen Signale sowohl in ihrem vorhandenen Format als auch in einem umgesetzen Format in dem Speicher RAM abgespeichert werden, so daß je nach Art der Empfangs-Teilnehmerstelle entweder die einen digitalen Signale oder die anderen digitalen Signale aus diesem Speicher RAM ausgelesen werden. Sind die betreffenden digitalen Signale wieder einer Teletex-Station als einer Empfangs-Teilnehmerstelle zuzuführen, so werden sie von der Rundschreibeinrichtung TTU entsprechend der Prozedur und dem Datenformat abgegeben, für die bzw. für das die betreffende Teletex-Station ausgelegt ist. Handelt es sich bei der betreffenden Empfangs-Teilnehmerstelle um eine Telex-Station, so werden die erwähnten digitalen Signale von der Rundschreibeinrichtung TTU entsprechend der Datenübertragungsprozedur und entsprechend dem Datenformat ausgesendet, für die bzw. für das die Telex-Station ausgelegt ist.

Um je nach Art der zu übertragenden digitalen Signale — entweder Signalisierungsinformation oder Nachrichteninformation — die Signalisierungs-Umsetzschaltung USARTd oder die Datenübertragungsschaltung HDLC wirksam schalten zu können, sind von dem Mikroprozessor MP der Steuerschaltung entsprechende Steuerinformationen über die Steuerbusleitung CB abzugeben. Derartige Steuersignale mag der Mikroprozessor MP jeweils zu bestimmten Zeitpunkten während der jeweiligen Übertragung von digitalen Signalen zu bzw. von dem Speicher RAM abgeben. Diese bedeutet, daß der Mikroprozessor MP entsprechende Steuersignale an die Umsetzschaltung USARTd während der sogenannten Signalisierungsphase und entsprechende Steuersignale an die Datenübertragungsschaltung HDLC während der Textübertragungsphase abgibt. Die für die Ansteuerung der erwähnten Umsetzschaltung USARTd bestimmten Steuersignale treten dabei während jeder Signalisierungsphase auf, d.h. während der Zeitspanne der Abgabe einer Signalisierungsinformation vom bzw. zum Speicher RAM. Die Schnittstellenschaltungen können dabei so ausgebildet sein, daß sie das Auftreten von Signalisierungsinformationen erkennen und daraufhin entsprechende Unterbrechungssignale an den Mikroprozessor MP abgeben.

Der Speicher RAM der Rundschreibeinrichtung TTU ist vorstehend zwar als einzelner Speicher betrachtet worden. Es ist jedoch ohne weiteres möglich, diesen Speicher in zwei Teilspeicher aufzuteilen, deren einer beispielsweise zur Aufnahme der Rufnummern von Empfangs-Teilnehmerstellen und gegebenenfalls auch der Rufnummer der Sende-Teilnehmerstelle dient und deren anderer zur Aufnahme der digitalen Nachrichtensignale dient.

Zur Herstellung von Rundschreibverbindungen ist von der jeweiligen Sende-Teilnehmerstelle zunächst die Rundschreibeinrichtung TTU zu belegen. Diese geschieht dadurch, daß von der betreffenden Sende-Teilnehmerstelle eine die Rundschreibeinrichtung TTU bezeichnende besondere Rufnummer abgegeben wird. Nach Erreichen der Rundschreibeinrichtung TTU überträgt die betreffende Sende-Teilnehmerstelle sodann die Fernschreibnachricht und zumindest die Rufnummern der Empfangs-Teilnehmerstellen, welche die betreffende Fernschreibnachricht erhalten sollen. Sodann kann die Verbindung zwischen dieser Sende-Teilnehmerstelle und der Rundschreibeinrichtung TTU wieder ausgelöst werden. Im Anschluß daran werden unter der Steuerung durch die Steuereinrichtung der Rundschreibeinrichtung TTU jeweils nur für eine Fernschreibnachrichtenübertragung Verbindungen zu den Empfangs-Teilnehmerstellen hin aufgebaut, die durch die zuvor von der Sende-Teilnehmerstelle abgegebenen Rufnummern bezeichnet worden sind. Dabei kann so vorgegangen sein, daß ein mehrmaliger Verbindungsversuch in dem Fall unternommen wird, daß die jeweilige Empfangs-Teilnehmerstelle gerade belegt ist. Nach erfolgter Abgabe der Fernschreibnachricht an die in Frage kommenden Empfangs-Teilnehmerstellen bzw. nach vergeblicher Durchführung von Versuchen der Abgabe der betreffenden Fernschreibnachricht an die eine oder andere in Frage kommende Empfangs-Teilnehmerstelle kann der Sende-Teilnehmerstelle ein Protokoll zugeführt werden, aus welchem hervorgeht, welche der Empfangs-Teilnehmerstellen die betreffende Fernschreibnachricht erhalten hat und welche nicht. Dazu werden die in der Rundschreibeinrichtung TTU zuvor aufgenommenen Rufnummern der betreffenden Empfangs-Teilnehmerstellen und die Rufnummer der Sende-Teilnehmerstelle herangezogen.

Abschließend sei bezüglich der Rundschreibeinrichtung TTU noch angemerkt, daß der in dieser enthaltene Mikroprozessor MP zusammen mit dem bereits erwähnten Programmspeicher ROM die eigentliche Steuereinrichtung dieser Rundschreibeinrichtung darstellt. Aus dem betreffenden Programmspeicher ROM erhält der Mikroprozessor MP auf entsprechende Anforderung hin Befehlsinformationen für die Ausführung der jeweils vorzunehmenden Steuerungsvorgänge. Wie oben bereits erläutert, laufen derartige Vorgänge unter dem Einfluß von Unterbrechungssignalen ab, die wenigstens einem Unterbrechungseingang des Mikroprozessors MP zugeführt werden. Für die Schaltungen der Rundschreibeinrichtung TTU können kommerziell erhältliche Bausteine verwendet werden. Für die Schnittstellenschaltung USARTa und für die Signalisierungs-Umsetzschaltung USARTd können Bausteine mit der Bezeichnung 8251A der Firma Intel verwendet werden. Die Datenübertragungsschaltung HDLC kann durch einen oder mehrere Bausteine mit der Bezeichnung 8273 der Firma Intel gebildet sein. Die Weichenschaltung MUX kann eine herkömmliche Multiplexerschaltung sein, wie sei beispielsweise unter der Bezeichnung SN74151 bekannt ist. Der Programmspeicher ROM kann durch Bausteine mit der Bezeichnung 2732 der Firma Intel gebildet sein, und der eigentliche Signalspeicher RAM kann durch Bausteine mit der Bezeichnung 2185 der Firma Intel gebildet sein. Als Mikroprozessor kann ein solcher des Typs 8085 der genannten Firma verwendet werden.

## Patentanspruch

Schaltungsanordnung zur Abgabe von digitalen Nachrichtensignalen im Zuge von Rundschreibverbindungen von wenigstens einer Sende-Teilnehmerstelle (Tx bzw. Ttx) an eine Mehrzahl von Empfangs-Teilnehmerstellen (Ttx bzw. Tx) über eine an einer Datenvermittlungsanlage (EDS) angeschlossene Rundschreibeinrichtung (TTU), wobei sämtliche Teilnehmerstellen (Tx, Ttx) an der Datenvermittlungsanlage (EDS) angeschlossen und für die Übertragung von Signalen entsprechend jeweils einer von zwei festgelegten, voneinander verschiedenen Datenübertragungsprozeduren und mit unterschiedlichen Datenformaten ausgelegt sind und wobei die jeweilige Sende-Teilnehmerstelle (Tx, bzw. Ttx) zusätzlich zu den Nachrichtensignalen ihre Rufnummer und die Rufnummern sämtlicher Empfangs-Teilnehmerstellen (Ttx bzw. Tx) abgibt, wobei zunächst die von der jeweiligen Sende-Teilnehmerstelle (Tx bzw. Ttx) entsprechend der für diese festgelegten Datenübertragungsprozedur und in dem für diese festgelegten Datenformat abgegebenen Nachrichtensignale und Rufnummern über Datenvermittlungsanlage (EDS) vollständig in einer Speicheranordnung (RAM) der eine gesonderte Steuereinrichtung (MP, ROM) enthaltenden Rundschreibeinrichtung (TTU) eingespeichert werden, welche lediglich für die Dauer der Übertragung der betreffenden Nachrichtensignale und Rufnummern mit der Datenvermittlungsanlage (EDS) verbunden ist, und wobei sodann die in der Speicheranordnung (RAM) der Rundschreibeinrichtung (TTU) gespeicherten Nachrichtensignale unter der Steuerung durch die Steuereinrichtung (MP, ROM) der Rundschreibeinrichtung (TTU) sequentiell über jeweils nur für die Dauer einer Nachrichtensignalübertragung hergestellte Verbindungen an die durch die ebenfalls gespeicherten Rufnummern bezeichneten Empfangs-Teilnehmerstellen (Ttx bzw. Tx) entsprechend den für diese festgelegten Datenübertragungsprozeduren und in den für diese festgelegten Datenformaten ausgesendet werden, dadurch gekennzeichnet, daß die Speicheranordnung (RAM) der Rundschreibeinrichtung (TTU) an der Datenvermittlungsanlage (EDS) über Schnittstellenschaltungen (USARTa; HDLC, USARTd) angeschlossen ist, von denen wenigstens eine Schnittstellenschaltung (USARTa) sowohl Signalisierungsinformationen als auch Nachrichtensignale aufzunehmen und abzugeben vermag und von denen wenigstens eine weitere Schnittstellenschaltung (HDLC, USARTd) eine für die Aufnahme und Abgabe von Signalisierungsinformationen (Rufnummern) dienende Signalisierungsschaltung (USARTd) und eine Datenübertragungsschaltung (HDLC) enthält, welche lediglich bei der Nachrichtensignalübertragung zwischen der Speicheranordnung (RAM) der Rundschreibeinrichtung (TTU) und der jeweiligen Teilnehmerstelle wirksam ist, daß die Signalisierungsschaltung (USARTd) und die Datenübertragungsschaltung (HDLC) der genannten weiteren Schnittstellenschaltung (HDLC, USARTd) eingangsseitig gemeinsam und ausgangsseitig über eine Weichenschaltung (MUX) an einer gesonderten Anschlußschaltung (SAGDx) der Datenvermittlungsanlage (EDS) angeschlossen sind, daß die Weichenschaltung (MUX) für die Übertragung von Nachrichtensignalen und von Signalisierungsinformationen in unterschiedlichen Stellungen eingestellt ist und daß die Steuerschaltung (MP, RAM) einen Mikroprozessor (MP) enthält, der mit einer Datenbusleitung (DB), einer Adreßbusleitung (AB) und einer Steuerbusleitung (CB) sowohl an den Schnittstellenschaltungen (USARTa; HDLC, USARTd) und der Speicheranordnung (RAM) als auch an einem Programmspeicher (ROM) angeschlossen ist.

## Revendication

Circuit pour la délivrance de signaux d'informations numériques au cours d'émissions télégraphiques simultanées à plusieurs correspondants par au moins un poste d'abonné émetteur (Tx ou Ttx) vers un grand nombre de postes d'abonnés récepteurs (Ttx ou Tx) par l'intermédiaire d'un diffuseur d'informations télégraphiques (TTU) raccordé à un central de commutation de données (EDS), tous les postes d'abonnés (Tx, Ttx) étant raccordés au central de commutation de données (EDS) et étant conçus pour la transmission de signaux respectivement en correspondance avec une de deux procédures, déterminées et différant l'une de l'autre, de transmission de données et avec des formats de données différents, et le poste d'abonné émetteur respectif (Tx ou Ttx) délivrant, en plus des signaux d'informations, son numéro d'appel et les numéros d'appel de tous les postes d'abonnés récepteurs (Ttx ou Tx), les signaux d'informations et numéros d'appel délivrés par le poste d'abonné émetteur respectif (Tx ou Ttx) en correspondance avec la procédure de transmission de données déterminée pour ceux-ci et dans le format déterminé pour ceux-ci sont tout d'abord mémorisés, par l'intermédiaire du central de commutation (EDS), entièrement dans une mémoire (RAM) du diffuseur d'informations télégraphiques (TTU) qui contient un dispositif de commande distinct (MP, ROM) et qui est raccordé au central de commutation de données (EDS) uniquement pour la durée de la transmission des signaux d'informations et numéros d'appel concernés, et ensuite les signaux d'informations mémorisés dans la mémoire (RAM) du diffuseur d'informations télégraphiques (TTU) étant émis séquentiellement, sous la commande du dispositif de commande (MP, ROM) du diffuseur d'informations télégraphiques (TTU), respectivement par l'intermédiaire de liaisons établies uniquement pour la durée d'une transmission de signaux d'informations, vers les postes d'abonnés récepteurs (Ttx ou Tx) désignés par les numéros d'appel également mémorisés, en correspondance avec les procédures de transmission de données déterminées pour ceux-ci et dans les formats de données déterminés pour ceux-ci, caractérisé par le fait que la mémoire (RAM) du diffuseur d'informations télégraphiques (TTU) est raccordée au central de commutation de données (EDS) par l'intermédiaire de circuits d'interface (USARTa; HDLC, USARTd) parmi lesquels au moins un circuit d'interface (USARTa) permet de recevoir et de délivrer aussi bien des informations de signalisation que des signaux d'informations et parmi lesquels au moins un autre circuit d'interface (HDLC, USARTd) contient un circuit de signalisation (USARTd) servant à la réception et à la délivrance d'informations de signalisation (numéros d'appel) et un circuit de transmission de données, qui n'est efficace que lors de la transmission de signaux d'informations entre la mémoire (RAM) du diffuseur d'informations télégraphiques (TTU) et le poste d'abonné respectif, que le circuit de signalisation (USARTd) et le circuit de transmission de données (HDLC) dudit autre circuit d'interface (HDLC, USARTd) sont raccordés, en commun côté entrée et par l'intermédiaire d'un circuit d'aiguillage (MUX), à un circuit de raccordement distinct (SAGDx) du central de commutation de données (EDS), que le circuit d'aiguillage (MUX) est réglé dans différentes positions pour la transmission de signaux d'informations et d'informations de signalisation, et que le circuit de commande (MP, RAM) contient un microprocesseur (MP) qui est raccordé à une ligne omnibus de données (DB), une ligne omnibus d'adresse (AB) et une ligne omnibus de commande (CB) aussi bien qu'aux circuits d'interface (USARTa; HDLC, USARTd) et à la mémoire (RAM) ainsi qu'également à une mémoire de programme (ROM).

## Claim

Circuit arrangement for the emission of digital message signals during multiple-address connections from at least one transmitting subscriber station (Tx, Ttx) to a plurality of receiving subscriber stations (Ttx, Tx) via a multiple-address device (TTU) which is connected to a data exchange system (EDS), wherein all the subscriber stations (Tx, Ttx) are connected to the data exchange system (EDS) and are designed to transmit signals in accordance with one of two predetermined data transmission procedures which differ from one another and with different data formats, and wherein, in addition to the message signals, the transmitting subscriber station in question (Tx, Ttx) emits its own subscriber number and the subscriber numbers of all the receiving subscriber stations (Ttx, Tx), wherein firstly the message signals and subscriber numbers, which are emitted from the relevant transmitting subscriber station (Tx, Ttx) in accordance with the data transmission procedure and data format specified for this transmitting subscriber station, are fully input via the data exchange system (EDS) into a storage arrangement (RAM) of the multiple-address device (TTU) which includes a special control device (MP, ROM) and which is connected to the data exchange system (EDS) only for the duration of the transmission of the particular message signals and subscriber numbers, and wherein, under the control of the control device (MP, ROM) of the multiple-address device (TTU), the message signals stored in the storage arrangement (RAM) of the multiple-address device (TTU) are then sequentially transmitted via connections, each of which is established only for the duration of the transmission of the message signals, to the receiving subscriber stations (Ttx, Tx) designated by the likewise stored subscriber numbers, in accordance with the data transmission procedures and in the data formats specified for these receiving subscriber stations, characterised in that the storage arrangement (RAM) of the multiple-address device (TTU) is connected to the data exchange system (EDS) via interface circuits (USARTa, HDLC, USARTd) of which at least one interface circuit (USARTa) is capable of receiving and emitting both items of signalling information and message signals, and of which at least one further interface circuit (HDLC, USARTd) includes a signalling circuit (USARTd) which serves to receive and emit items of signalling information (subscriber numbers) and further includes a data transmission circuit (HDLC) which is operative only during the transmission of message signals between the storage arrangement (RAM) of the multiple-address device (TTU) and the subscriber station in question, that the signalling circuit (USARTd) and the data transmission circuit (HDLC) of the aforementioned further interface circuit (HDLC, USARTd) are connected in common at their input and via a separating filter circuit (MUX) at their output to a special connection circuit (SAGDx) of the data exchange system (EDS), that the separating filter circuit (MUX) is set in different positions for the transmission of message signals and for items of signalling information, and that the control circuit (MP, RAM) includes a microprocessor (MP) which is connected by a data bus line (DB), an address bus line (AB), and a control bus line (CB) both to the interface circuits (USARTa, HDLC, USARTd) and the storage arrangement (RAM) and likewise to a programme store (ROM).

0 017 034